# EUROPÄISCHE PATENTSCHRIFT

(11) **EP 1 215 417 B1**
(45) Veröffentlichungstag und Bekanntmachung des Hinweises auf die Patenterteilung: **16.07.2008**
(21) Anmeldenummer: 01126769.7
(22) Anmeldetag: 09.11.2001
(51) Int. Cl.: F16H 57/02

(54) **Baureihe von Getrieben und Verfahren zur Fertigung einer Baureihe**
A series of transmissions and a method for building the same
Gamme des transmissions et méthode pour la fabrication d'une gamme

(30) Priorität: 13.12.2000 DE 10062039
(43) Veröffentlichungstag der Anmeldung: 19.06.2002
(73) Patentinhaber: Sew-Eurodrive GmbH & Co. KG, 76646 Bruchsal (DE)
(72) Erfinder: Goppelsröder, Egon, 76661 Philippsburg (DE); Bender, Josef, 76684 Östringen (DE); Zimmermann, Heinrich, 76646 Bruchsal (DE)

(56) Entgegenhaltungen:
- WO-A-94/17319
- DE-A- 2 723 645
- DE-B- 1 191 649
- FR-A- 1 276 339
- GB-A- 634 969
- GB-A- 1 227 752
- US-A- 2 623 406
- US-A- 3 673 885
- US-A- 3 888 134
- US-A- 5 095 767
- HANSEN D C: "EIN GELUNGENER VERSUCH DER ZAHNRADGETRIEBENORMUNG" ANTRIEBSTECHNIK, KRAUSSKOPF VERLAG FUR WIRTSCHAFT GMBH. MAINZ, DE, Bd. 14, Nr. 6, 1. Juni 1975 (1975-06-01), Seiten 338-342, XP002043483 ISSN: 0722-8546

## Beschreibung

Die Erfindung betrifft eine Baureihe von ein- oder mehrstufigen Getrieben und ein Verfahren zur Fertigung einer Baureihe.

Bei Baureihen von Getrieben ist bekannt, dass innerhalb einer Baugröße Durchmesser von Wellen und verzahnten Teilen, die Auslegung der Verzahnung und insbesondere der Achsabstand den Bereich der Übersetzungszahlen von ein- oder mehrstufigen Getrieben bestimmen. Wesentlich für diesen Bereich der Übersetzungszahlen ist außerdem die kleinste verwendbare Verzahnung oder der Teilkreisdurchmesser derselben.

Der Erfindung liegt daher die Aufgabe zugrunde, den Bereich der Übersetzungszahlen innerhalb einer Baugröße einer Baureihe wesentlich zu vergrößern, wobei die Fertigung kostengünstig sein soll.

Erfindungsgemäß wird die Aufgabe bei der Baureihe von ein- oder mehrstufigen Getrieben nach den in Anspruch 1 und 5 angegebenen Merkmalen und bei dem Verfahren zur Fertigung einer Baureihe nach den in Anspruch 6 angegebenen Merkmalen gelöst.

Wesentliche Merkmale der Erfindung bei der Baureihe sind, dass die Baureihe ein- oder mehrstufigen Getrieben enthält, umfassend mindestens eine Baugröße von Getrieben, wobei jede Baugröße jeweils mindestens eine Variante umfasst, die jeweils mindestens ein Gehäuseteil und mindestens eine Getriebestufe umfasst, wobei diese jeweilige Getriebestufe durch mindestens einen Achsabstand kennzeichenbar ist und bei einer Baugröße mindestens zwei Varianten zwei verschiedene Achsabstände aufweisen, wobei die Gehäuseteile der zwei Varianten beim Fertigen mindestens aus demselben gegossenen Rohteil fertigbar sind und wobei das Fertigen mindestens eine spanende Bearbeitung umfasst.

Somit werden also keine verschiedenen Getriebe innerhalb einer Baugröße produziert, sondern möglichst viele Teile wiederverwendet, wodurch die Kosten reduziert werden. Insbesondere wird durch Verwenden derselben gegossenen Rohteile für verschieden Varianten die Losgröße erhöht und es werden die Stückkosten reduziert. Die verschiedenen Varianten sind vorteilhaft aus demselben Rohteil mittels spanender Bearbeitung erzeugbar, wobei beispielsweise ein Drehen verwendbar ist. Zu jedem Achsabstand gehört ein um die entsprechende Achse symmetrisch sitzender Lagersitz, da das den Achsabstand aufweisende Teil zu lagern ist. Eine einfache Fertigung ist bei der Erfindung dadurch vorhanden, dass das Gehäuseteil des Getriebes in einer Maschine symmetrisch um diese jeweilige entsprechende Achse einspannbar ist und die Bearbeitung dann spanend, insbesondere unter Drehen des Maschinentisches, ausführbar ist.

Bei einer vorteilhaften Ausgestaltung ist bei mindestens einer Baugröße mindestens ein Gehäuseteil in mindestens zwei, gegeneinander verdrehten Positionen und/oder Orientierungen bei der Fertigung montierbar. Von Vorteil ist dabei, dass durch bloßes Drehen eines Teiles beim Fertigen verschiedene Varianten herstellbar sind. Dies ist äußerste einfach durchführbar und kostengünstig ausführbar.

Bei einer vorteilhaften Ausgestaltung entspricht den zwei, gegeneinander verdrehten Positionen und/oder Orientierungen des Gehäuseteils jeweils ein Achsabstand der Getriebestufe, wobei durch die Wahl des Drehwinkels verschiedene Achsabstände erzeugbar sind. Von Vorteil ist dabei, dass mehrere Achsabstände abhängig vom Drehwinkel erzeugbar sind.

Bei einer vorteilhaften Ausgestaltung ist aus dem gegossenen Rohteil eines Gehäuseteils einerseits mittels spanender Bearbeitung ein Gehäuseteil für eine Variante mit einer Getriebestufe mit einem ersten Achsabstand oder wahlweise andererseits mittels spanender Bearbeitung ein Gehäuseteil für eine Variante mit einer Getriebestufe mit einem zweiten Achsabstand, der sich vom ersten Achsabstand unterscheidet, erzeugbar. Von Vorteil ist dabei, dass aus demselben Rohteil Gehäuseteile von verschiedenen Varianten in einfacher und kostengünstiger Weise erzeugbar sind.

Bei einer vorteilhaften Ausgestaltung weist das gegossene Rohteil oder ein Gehäuseteil einen ersten Bereich 51 auf, der rotationssymmetrisch zu einer ersten Achse 53 ist, und zusätzlich einen zweiten Bereich 52, der rotationssymmetrisch zu einer zweiten Achse 54 ist, wobei der zweite Bereich 52 beim Fertigen abschneidbar ist oder spanend bearbeitend entfernbar ist, wobei das Abschneiden oder spanende Bearbeiten entlang einer Kontur 38 erfolgt, wobei mindestens ein Lagersitz (35, 44 ) und mindestens ein Wellendichtringsitz (36,43) radial innerhalb des ersten Bereichs 51 liegen, wobei Lagersitz (35, 44) und mindestens ein Wellendichtringsitz (36,43) um die zweite Achse 54 rotationssymmetrisch angeordnet sind, wenn der zweite Bereich 52 beim Fertigen an der Kontur 38 abgeschnitten oder entfernt wird, und andernfalls um die erste Achse 53 rotationssymmetrisch angeordnet sind. Von Vorteil ist dabei, dass durch Bearbeiten an der Kontur aus demselben Rohteil Gehäuseteile von verschiedenen Varianten in einfacher und kostengünstiger Weise erzeugbar sind.

Bei einer vorteilhaften Ausgestaltung ist die Getriebestufe eine eintriebsseitig angeordnete Stufe. Von Vorteil ist dabei, dass nur der eintriebsseitige Teil des Rohteils erfindungsgemäß bearbeitet werden muss zur Erzeugung der Varianten mit verschiedenen Achsabständen.

Bei einer vorteilhaften Ausgestaltung ist die Getriebestufe eine Stirnradstufe. Von Vorteil ist dabei, dass ein eintreibendes Ritzel der Stirnradstufe bei verschiedenen Achsabständen verschiedenartig ausführbar ist.

Bei einer vorteilhaften Ausgestaltung liegt der Achsabstand zwischen zwei verzahnten Teilen, wie Rad, verzahnte Welle, Welle mit Einsteckritzel, Welle mit Aufsteckritzel oder Schnecke, vor. Von Vorteil ist dabei, dass das eintreibende verzahnte Teil je nach Achsabstand als beispielhaft verzahnte Welle, Welle mit Einsteckritzel oder Welle mit Aufsteckritzel ausführbar ist. Somit decken die auf diese Weise hergestellten Varianten verschiedene Bereiche von Übersetzungen derart ab, dass der gesamte, von der Baureihe innerhalb einer Baugröße abgedeckte Bereich von Übersetzungen sehr groß ist. Dies liegt daran, dass erfindungsgemäß eine Variante mit Einsteckritzel einsetzbar ist, die mit einem besonders kleinen Teilkreisdurchmesser ausführbar ist, und ebenso eine Variante mit einem Aufsteckritzel, die mit einem besonders großen Teilkreisdurchmesser ausführbar ist, herstellbar ist.

Wesentliche Merkmale der Erfindung bei dem Verfahren zur Fertigung einer Baureihe von einoder mehrstufigen Getrieben, umfassend mindestens eine Baugröße von Getrieben, wobei jede Baugröße jeweils mindestens eine Variante umfasst, die jeweils mindestens ein Gehäuseteil und mindestens eine Getriebestufe umfasst, sind, dass diese jeweilige Getriebestufe durch mindestens einen Achsabstand kennzeichenbar ist, bei einer Baugröße mindestens zwei Varianten zwei verschiedene Achsabstände aufweisen, wobei die Gehäuseteile der zwei Varianten beim Fertigen mindestens aus demselben gegossenen Rohteil gefertigt werden und wobei das Verfahren zur Fertigung mindestens eine spanende Bearbeitung umfasst.

Von Vorteil ist dabei, dass Varianten mit verschiedenen Achsabständen in kostengünstiger und einfacher Weise herstellbar sind, da beim Fertigen die spanende Bearbeitung verwendbar ist.

Wesentliche Merkmale der Erfindung bei der Baureihe von mindestens eine Getriebestufe umfassenden Getrieben, umfassend mindestens eine mit ganzzahligem i kennzeichenbare Baugröße **Bᵢ** von Getrieben, sind, dass jede Baugröße **Bᵢ** jeweils mindestens eine Variante umfasst, die jeweils mindestens ein Gehäuseteil (4, 32, 40) und die Getriebestufe ein erstes und ein zweites Verzahnungsteil (2 und 21,22, 23, 39, 41) umfasst,
wobei jede Baugröße Bᵢ Varianten umfasst, die verschiedene Achsabstände zwischen erstem und zweitem verzahnten Teil aufweisen, wobei jede Baugröße Bᵢ mindestens m solche Achsabstände umfasst und m ganzzahlig und größer als 1 ist, und wobei mit diese Achsabstände mit A_{i,n} bezeichenbar sind, und wobei n ganzzahlige Werte von 0 bis m -1 annimmt,
und dass die Achsabstände A_{i,n} bei jeweils konstantem n und laufendem i eine Reihe bilden, die gestuft ist, insbesondere in der Reihe 54, 45, 38, 32 oder in einer geometrischen oder arithmetischen Reihe,
und dass die Differenz A_{i,n} - A_{i,0} eine von n abhängige Konstante cₙ ist für alle i,
und wobei das erste verzahnte Teil 2 die Zähnezahl Z_{1,k} hat und das zweite verzahnte Teil (21,22, 23, 39, 41) die Zähnezahl Z_{2,p,q} hat, wobei innerhalb einer Baugröße Bᵢ verschiedene Zähnezahlen Z_{1,k} und Z_{2,p,q} verwendbar sind, und wobei k,p und q ganzzahlig sind,
und dass die Zähnezahlen Z_{2,p,q} in mit dem Index p nummerierte Teilsequenzen klassifizierbar sind, und die Elemente der Teilsequenz mit q nummeriert sind,
und dass die Zähnezahlen Z_{2,p,q} bei jeweils konstantem p und laufendem q eine Reihe bilden, die gestuft ist, insbesondere eine Reihe, wie 90, 92, 94, 95, oder aufeinanderfolgender Zahlen, wie 1,2,3,4, oder eine geometrische oder arithmetische Reihe,
und dass die Differenz Z_{2,p+1,q} - Z_{2,p,q} eine nur von p abhängige Konstante cₚ, insbesondere 0, ist für alle q,
und dass das erste verzahnte Teil innerhalb der Baugröße Bᵢ in jeder Teilsequenz mindestens einmal wiederverwendet ist, wobei Z_{1,p+1,q} gleich Z_{1,p,q} ist.

Von Vorteil ist dabei, dass somit nicht nur Ritzel in verschiedenen Baugrößen verwendbar sind sondern auch innerhalb einer jeweiligen Baugröße dasselbe Rad. Im Zusammenspiel mit den mit m gekennzeichneten verschiedenen Achsabständen und der Wiederverwendung von verzahnten Bauteilen bei Varianten mit verschiedenem , also verschiedenem Achsabstand ergibt sich eine entscheidende Reduktion der Bauteilevielfalt und gleichzeitig ein sehr weiter Bereich von Übersetzungszahlen für die Baureihe, sogar in jeder Baugröße.

Weitere vorteilhafte Ausgestaltungen ergeben sich aus den Unteransprüchen.

Wesentlicher Stand der Technik ist durch DE 2 723 645, US 5 095 767, WO 94/17 319, US 3 888 134, GB 1 227 752, GB 634 969, US 3 673 885 gegeben.

### Bezugszeichenliste

- 1: Getriebegehäuse
- 2: Rad
- 3: Befestigungsschrauben
- 4: Antriebsseitiger Deckel
- 5: Wellendichtring
- 6: Lager
- 7a, 7b, 7c: Eintreibende Welle
- 8: Verzahnung
- 21: Ritzel-Verzahnung
- 22: Passfeder
- 23: Einsteckritzel
- 24: Aufsteckritzel
- 31: Getriebedeckel
- 32: Getriebegehäuse
- 33: Wellendichtring
- 34: Lager
- 35: Lagersitz, gedreht
- 36: Wellendichtringsitz, gedreht
- 37: Eintreibende Welle
- 38: Kontur
- 39: Aufsteckritzel
- 40: Getriebegehäuse
- 41: Einsteckritzel
- 42: Wellendichtring
- 43: Wellendichtringsitz, gedreht
- 44: Lagersitz, gedreht
- 45: Lager
- 46: Eintreibende Welle
- 51: Um die erste Achse rotationssymmetrischer Bereich oder erster Außenbereich
- 52: Um die zweite Achse rotationssymmetrischer Bereich oder zweiter Außenbereich
- 53: erste Achse
- 54: zweite Achse

Die Erfindung wird nun anhand von Abbildungen näher erläutert:

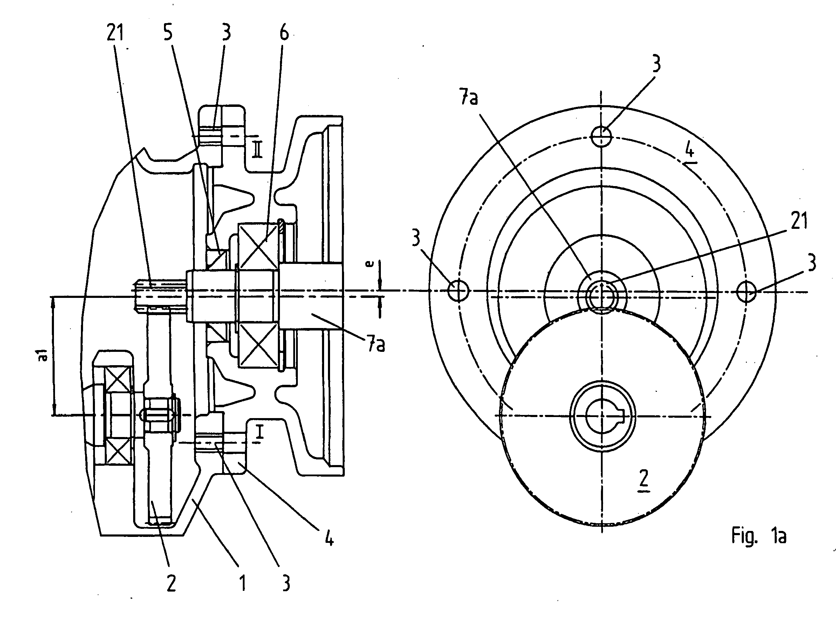

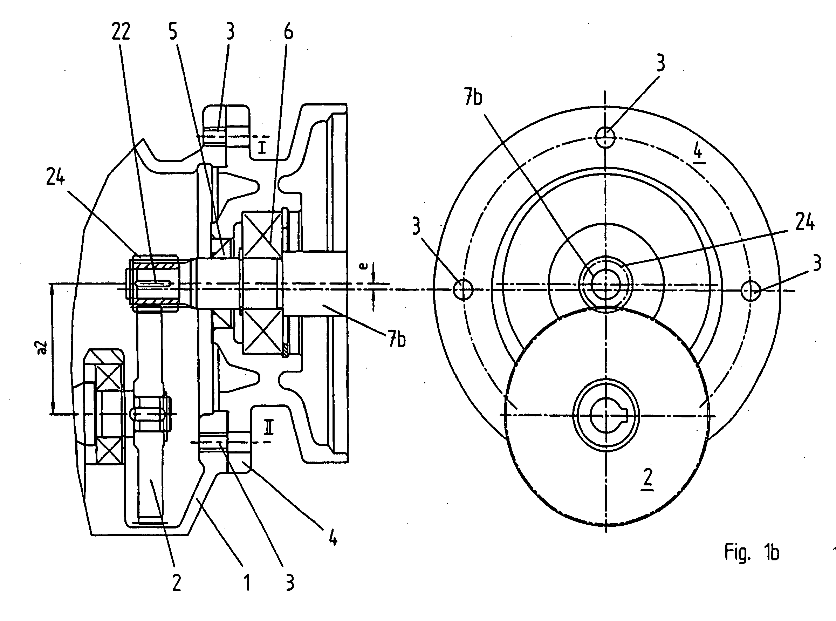

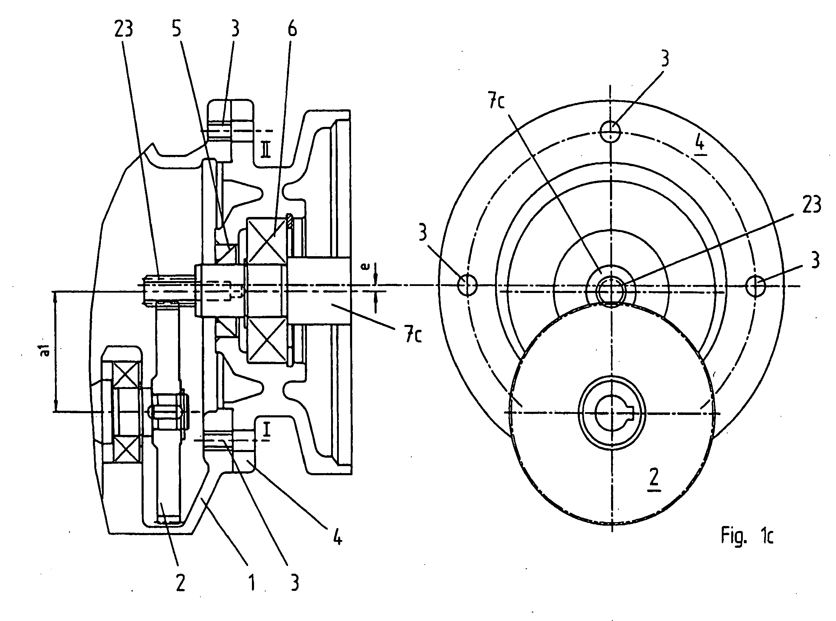

In den Figuren 1a, 1b, 1c ist eine erste Ausführungsart der Erfindung anhand mehrerer Ausführungsbeispiele gezeigt.

In der Figur 1a ist ein erfindungsgemäßes Getriebe mit Getriebegehäuse 1 und antriebsseitigem Deckel 4 gezeigt. Das Getriebe umfasst eintriebsseitig eine Stirnrad-Getriebestufe, die aus einem Rad 2 und einer Motorwelle als eintreibende Welle 7a mit Ritzel-Verzahnung 21 besteht. Antriebsseitiger Getriebedeckel 4 und Getriebegehäuse 1 sind mit Befestigungsschrauben 3 lösbar verbunden. Die Motorwelle 7a ist mittels eines Wellendichtrings 5 gegen den antriebsseitigen Getriebedeckel 4 abgedichtet und mittels des Lagers 6 in diesem gelagert. Der Achsabstand zwischen der Achse des Rades 2 und der eintreibenden Welle 7a ist mit a1 bezeichnet. In der rechten Hälfte der Figur 1a ist eine Draufsicht auf den antriebsseitigen Getriebedeckel 4 mit Rad 2 gezeigt. Die Bohrlöcher der Befestigungsschrauben 3 sind auf einem Kreis angeordnet, dessen Mittelpunkt nicht mit dem Mittelpunkt der Achse der eintreibenden Welle 7a und somit auch nicht mit dem Mittelpunkt des zugehörigen Sitzes des Lagers 6 und des Sitzes des Wellendichtrings 5 zusammenfällt. Die Sitze des Lagers 6 und des Wellendichtrings 5 sind versetzt positioniert um den Betrag der Exzentrizität e vom Mittelpunkt des Kreises der Bohrlöcher.

Wegen dieser exzentrischen Anordnung der eintreibenden Welle 7a bezüglich des Symmetriepunktes der Anordnung der Bohrlöcher 3 oder des eintreibenden Getriebedeckels 4 ist es ermöglicht den eintreibenden Getriebedeckel 4 um 90° oder 180° oder 270° verdreht zu verbinden.

Eine solche, um 180 ° gedrehte Ausführungsform ist in Figur 1b gezeigt. Dabei ist nun der Achsabstand a2 von der Achse des Rades 2 und der Achse der eintreibenden Welle 7b größer und beträgt a2= a1+ 2 e. Daher ist die eintreibende Welle 7b vorteilhaft mit einem Aufsteckritzel 24 versehen, das mittels einer Passfeder 22 mit der eintreibenden Welle 7b verbunden ist. Die um 180° gedrehte Positionierung des eintreibenden Getriebedeckels 4 ist auch an der Kennzeichnung der Bohrlöcher 3 mit I und II verdeutlicht, die in der Figur 1b im Vergleich zu Figur 1a verändert ist.

In der Figur 1c ist wiederum ein Ausführungsbeispiel gezeigt, das im Wesentlichen der Figur 1a entspricht. Im Unterschied zur Figur 1a ist jedoch die eintreibende Welle 7c mit einem Einsteckritzel 23 versehen, so dass auch sehr kleine Teilkreisdurchmesser der Ritzelverzahnung ermöglicht sind. Dies erweitert zusätzlich die realisierbaren Übersetzungszahlen der Baureihe von Getrieben nach den Figuren 1a, 1b und 1c. Dass aber nun innerhalb derselben Baugröße durch bloßes Drehen des eintreibenden Getriebedeckels gemäß Figur 1b im Vergleich zu Figur 1a ein anderer Achsabstand der Stirnradgetriebestufe realisiert wird, erweitert die realisierbaren Übersetzungszahlen der Baureihe von Getrieben nach den Figuren 1a, 1b und 1c sehr.

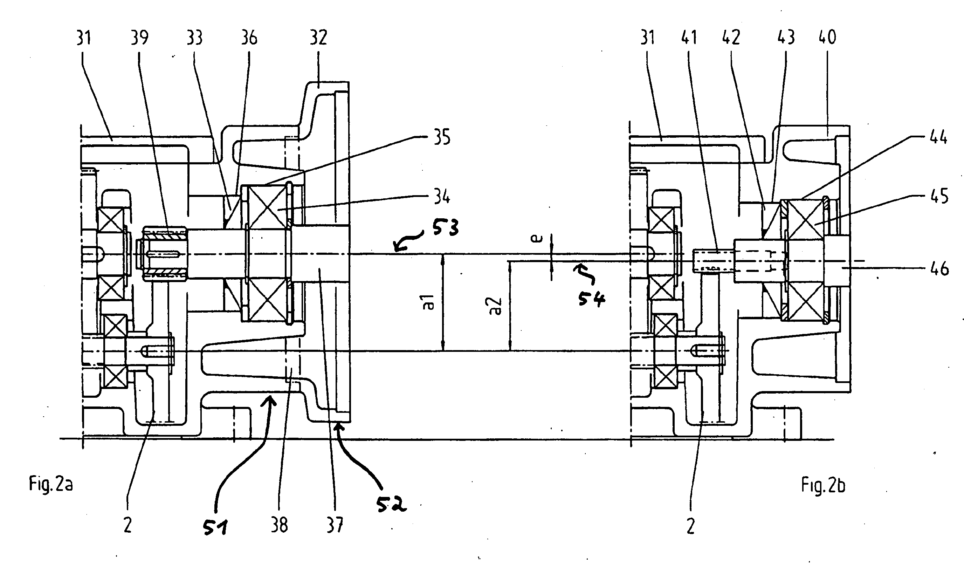

In den Figuren 2a, 2b ist eine zweite Ausführungsart der Erfindung anhand zweier weiterer Ausführungsbeispiele gezeigt.

In der Figur 2a ist ein zweites erfindungsgemäßes Getriebe mit Getriebegehäuse 32 und Getriebedeckel 31 gezeigt. Dabei ist die eintreibende Welle 37 im Lager 34 gelagert und mittels des Wellendichtrings 33 abgedichtet. Die eintreibende Welle trägt dabei ein Aufsteckritzel 39, das mittels einer Passfederverbindung mit der eintreibenden Welle verbunden ist. Der Wellendichtring 33 ist im Wellendichtringsitz 36 montiert; das Lager 34 ist im Lagersitz 35 montiert.

Das Getriebegehäuse 32 wird durch spanende Bearbeitung eines gegossenen Rohteils erzeugt. Hierbei werden Lagersitz 35 und Wellendichtringsitz 33 aus dem Rohteil gedreht oder in anderer Weise spanend bearbeitet.

Das Rohteil des Getriebegehäuses 32 wird bei einer erfindungsgemäßen Ausführungsform zur Erzeugung des Getriebes nach Figur 2b auch derart an der Kontur 38 des Getriebegehäuses 32 aus Figur 2a abgedreht, dass das Getriebegehäuse 40 der Figur 2b entsteht. In Figur 2b ist somit derselbe Getriebedeckel 31 verwendbar. Die Kontur 38 ist derart gelegt und das Getriebegehäuse derart geformt, dass nun der Lagersitz 44 und der Wellendichtringsitz 43 um den Betrag e im Vergleich zur Figur 2a versetzt positionierbar sind. Somit sind das Lager 45 und der Wellendichtring 42 derart positioniert, dass der Achsabstand a2 zwischen Rad 2 und Achse der eintreibenden Welle 46 nach Figur 2b beziehungsweise der Achsabstand a1 zwischen Rad 2 und Achse der eintreibenden Welle 37 nach Figur 2a um den Wert e differieren.

Die Achse der eintreibenden Welle 37 in Figur 2a und 46 in Figur 2b ist jeweils zentrisch zum eintriebseitigen Ende des Getriebegehäuses 32 ausgeführt, so dass das Drehen in besonders einfacher Weise ausführbar ist.

Somit ist die eintreibende Welle 46 mit einem Einsteckritzel 41 nach Figur 2b ausführbar, das sehr kleine Teilkreisdurchmesser seiner Verzahnung erlaubt. Außerdem ist die Welle 37 mit einem Aufsteckritzel 39 nach Figur 2a ausführbar, das größere Teilkreisdurchmesser erlaubt.

Die Baureihe der Getriebe nach Figur 2a und Figur 2b weist also einen sehr großen Bereich realisierbarer Übersetzungszahlen auf, da zwei Achsabstände herstellbar sind, wobei nur ein Rohteil für das Getriebegehäuse 32 verwendet wird und somit die Kosten sehr reduziert sind.

Bei der erfindungsgemäßen Ausführungsform nach den Figuren 2a und 2b weist das gegossene Rohteil einen ersten Bereich 51 auf, der rotationssymmetrisch zu einer zweiten Achse 54 ist, und zusätzlich einen zweiten Bereich 52 auf, der rotationssymmetrisch zu einer ersten Achse 53 ist. Diese Achsen habe den Achsabstand a1 und a2 zu der Achse des Rades 2. Somit ist der erste Bereich 51 beim Fertigen einfach und kostengünstig abschneidbar oder spanend bearbeitend entfernbar, wobei das Abschneiden oder spanende Bearbeiten entlang einer Kontur 38 erfolgt. Das Rohteil wird beim Fertigen nämlich auf einer Drehmaschine symmetrisch um die erste oder zweite Achse (53,54) eingespannt und bearbeitet. Da die ersten und zweiten Bereiche (51, 52) rotationssymmetrisch sind, muss der Maschinentisch nur gedreht werden und das Werkzeug darf sich in im Wesentlichen konstanter Position befinden. Ebenso einfach ist der Lagersitz (35,44) und der Wellendichtringsitz (32, 43) jeweils durch Drehen erzeugbar. Lagersitz (35,44) und Wellendichtringsitz (32, 43) sitzen zwar innerhalb des ersten Bereiches 51, werden jedoch je nach Variante gemäß Figur 2a oder 2b symmetrisch zur ersten oder zweiten Achse (53, 54) erzeugt.

In der Figur 2a liegt der um die erste Achse 53 rotationssymmetrisch angeordnete Bereich 51 von der rechts liegenden Eintriebseite des Getriebegehäuses 32 bis zur Kontur 38. Der um die zweite Achse 54 angeordnete Bereich folgt nach der Kontur 38.

Bei Figur 2a liegen Lagersitz 35 und Wellendichtringsitz 32 innerhalb des ersten Bereichs 51 und werden durch Drehen des Getriebegehäuses 32 um die erste Achse 53 spanend bearbeitend erzeugt.

Bei Figur 2b liegen Lagersitz 44 und Wellendichtringsitz 43 innerhalb des ersten Bereichs 51 und werden durch Drehen des Getriebegehäuses 40 um die erste Achse 53 spanend bearbeitend erzeugt. Dabei entspricht das Getriebegehäuse 40 der Figur 2b dem an der Kontur 38 abgeschnittenen Getriebegehäuse 32 der Figur 2a.

Mit den beschriebenen erfindungsgemäßen Getrieben lässt sich eine Baureihe erzeugen, die im Folgenden mathematisch beschrieben wird, wobei die erfinderische Idee in einer verallgemeinerten Weise beschrieben wird, die dann auch weitere erfindungsgemäße Varianten umfasst.

Die Baureihe umfasst mindestens eine Baugröße **Bᵢ** von Getrieben, wobei jede Baugröße **Bᵢ** jeweils mindestens eine Variante umfasst, die jeweils mindestens ein Gehäuseteil (4, 32, 40) und die Getriebestufe ein erstes und ein zweites Verzahnungsteil (2 und 21,22, 23, 39, 41) umfasst.

Wesentlich ist, dass jede Baugröße Bᵢ Varianten umfasst, die verschiedene Achsabstände zwischen erstem und zweitem verzahnten Teil aufweisen, wobei jede Baugröße Bᵢ mindestens m solche Achsabstände umfasst und m ganzzahlig und größer als 1 ist, und wobei diese Achsabstände mit A_{i,n} gekennzeichnet werden, und wobei i die Baugröße kennzeichnet, n Werte von 0 bis m-1 annimmt und m, i und n ganzzahlig sind.

Wie oben beschrieben sind beispielsweise 3 Achsabstände mittels Drehung um 0°, 45° und 90° erzeugbar. Dann läuft n von 0 bis 2.

Außerdem ist die erfindungsgemäße Baureihe derart herstellbar, dass die Achsabstände A_{i,n} bei jeweils konstantem n und laufendem i eine Reihe bilden, die gestuft ist, beispielsweise in einer geometrischen oder arithmetischen Reihe oder in einer durch eine Norm bestimmten Reihe. Eine weiter vorteilhafte Reihe ist eine eine Reihe aus dem Stand der Technik umfassende Reihe, weil somit die erfindungsgemäße Baureihe in eine vorhandene Baureihe aus dem Stand der Technik einfügbar ist und somit möglichst viele Teile der bekannten Baureihe wiederverwendet und die Produktion nur unwesentlich verändert werden muss.

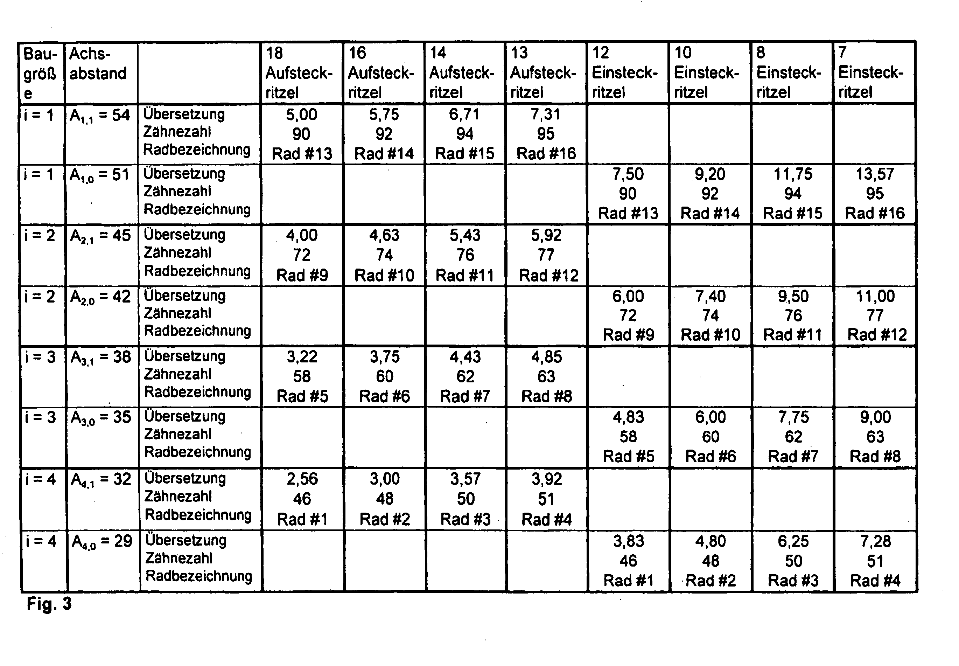

Die erfindungsgemäße Baureihe ist derart herstellbar, dass die Differenz A_{i,n} - A_{i,0} eine von n abhängige Konstante cₙ ist für alle i. Ein einfaches Beispiel einer erfindungsgemäßen Reihe von Achsabständen ist beispielhaft folgende Reihe: 10, 12, 20, 22, 30, 32, 40, 42. In der Figur 3 ist eine andere Reihe beschrieben, bei der n von 0 bis 1 läuft und i von 1 bis 4, also vier Baugrößen vorhanden sind, in denen jeweils zwei Achsabstände realisierbar sind. Die Reihe der Achsabstände ist hierbei: 29, 32, 35, 38, 42, 45, 51, 54 mm. Dabei ist also A_{i,1} - A_{i,0} = cₙ = 3 mm.

Aus der in der Figur 3 dargestellten Getriebebaureihematrix ist weiter ersichtlich, dass beim ersten Achsabstand A_{i,1} ein Aufsteckritzel verwendet wird und beim zweiten Achsabstand A_{i,0} ein Einsteckritzel. Innerhalb jeder Baugröße ist also einer Familie von Achsabständen eine Familie von Ritzeln eindeutig zugeordnet. Durch das Vorsehen einer ganzen Familie von Ritzeln und zugeordneten Achsabständen wird vorteiligerweise ein weiter Bereich von Übersetzungszahlen ausführbar. Besonders wesentlich ist dabei, dass dies alles mit immer dem gleichen Getriebegehäuse oder dessen Urform ausführbar ist.

Außerdem ist die erfindungsgemäße Baureihe derart herstellbar, dass das erste verzahnte Teil, beispielhaft das Rad 2, die Zähnezahl Z_{1,k} hat und das zweite verzahnte Teil (21,22, 23, 39, 41) die Zähnezahl Z_{2,p,q} hat, wobei innerhalb einer Baugröße Bᵢ verschiedene Zähnezahlen Z_{1,k} und Z_{2,p,q} verwendbar sind, und wobei k,p und q ganzzahlig sind, und wobei die Zähnezahlen Z_{2,p,q} in mit dem Index p nummerierte Teilsequenzen klassifizierbar sind und die Elemente der Teilsequenz mit q nummeriert sind.

Bei Figur 3 ist die mit p=1 nummerierbare, erste Teilsequenz aus einigen Aufsteckritzeln und die mit p=2 nummerierbare, zweite Teilsequenz aus einigen Einsteckritzeln gebildet. Die jeweiligen Räder, die zusammen mit einem Einsteckritzel verwendet werden, sind innerhalb der Matrix durchnummeriert mit #1 bis #16. Dasselbe gilt für die Räder, die zusammen mit einem Einsteckritzel verwendet werden. Zu jedem Einsteck- und Aufsteckritzel ist auch dessen Zähnezahl eingetragen. Die Teilsequenz der Aufsteckritzel umfasst die Zähnezahlen 13, 14, 16, 18. Die Teilsequenz der Einsteckritzel umfasst die Zähnezahlen 7,8,10,12. In der Matrix der Baureihe sind die Räder in der Spalte des zugehörigen Ritzels eingetragen und die Zähnezahl des Rades angegeben. Beipielsweise ist in der Baureihe 1 das Rad Nummer#13 mit der Zähnezahl 90 zusammen mit dem 18 Zähne aufweisenden Aufsteckritzel vorgesehen. Das zugehörende Übersetzungszahl 5 ist ebenfasslle eingetragen. Insbesondere ist dieses Rad auch mit dem 12 Zähne aufweisenden Einsteckritzel zur Erzeugung der Übersetzungszahl 7,5 vorgesehen. Wegen der Vorsehung des zweiten Achsabstandes **ist es also ermöglicht, dieses Rad zweifach innerhalb einer Baugröße zu verwenden und gleichzeitig einen weiteren Bereich von Übersetzunszahlen realisieren zu können als es entweder mit nur Aufsteckritzeln oder nur** **Einsteckritzeln ermöglicht wäre bei gleichen fachüblichen, konstruktions- und herstellungsbedingten Randbedingungen.**

Bei einem weiteren erfindungsgemäßen Ausführungsbeispiel ist beispielsweise eine mit p= 3 nummerierbare, dritte Teilsequenz aus verzahnten Wellen gebildet.

Bei jeder Baugröße werden entsprechend der Baugröße anders dimensionierte Ritzel verwendet.

Zu jeder Teilsequenz gehört ein gewisser Achsabstand, wobei von der ersten über die zweite zur dritten Teilsequenz der jeweilige Achsabstand kleiner wird und im Wesentlichen bei einer anderen erfindungsgemäßen Ausführungsform auch die Zähnezahl. Somit wird ein sehr weiter Bereich von Übersetzungszahlen erzeugbar innerhalb derselben Baugröße.

Außerdem ist die erfindungsgemäße Baureihe derart herstellbar, dass die Zähnezahlen Z_{2,p,q} bei jeweils konstantem p und laufendem q eine Reihe bilden, die gestuft ist. Beispielsweise ist die Reihe als Reihe aufeinanderfolgender Zahlen, wie 1,2,3,4, oder als Reihe aufeinanderfolgender Zahlen mit größerem Abstand, wie 1,3,5,7,9,11 oder 1,4,7,10,13,16 oder dergleichen, als genormte, geometrische oder arithmetische Reihe ausführbar. In der Figur 3 ist als erfindungsgemäßes Ausführungsbeispiel in der Baugröße 1 die Reihe 90, 92, 94, 95 verwendet. Wesentlich ist, dass dasselbe verzahnte Teil für p= 1 und p=2 verwendet wird, also für Aufsteckritzel und Einsteckritzel.

Außerdem ist die erfindungsgemäße Baureihe derart herstellbar, dass die Differenz Z_{2,p+1,q} - Z_{2,p,q} eine nur von p abhängige Konstante cₚ ist für alle q, und dass das erste verzahnte Teil innerhalb der Baugröße Bᵢ in jeder Teilsequenz mindestens einmal wiederverwendet ist, wobei Z_{1,p+1,q} gleich Z_{1,p,q} ist. Dies ist ein entscheidender Vorteil, da somit nicht nur Ritzel in verschiedenen Baugrößen verwendbar sind sondern auch innerhalb einer jeweiligen Baugröße dasselbe Rad. Somit wird die Bauteilevielfalt entscheidend reduziert und gleichzeitig ein sehr weiter Bereich von Übersetzungszahlen ermöglicht. Wesentlich und notwendig zur Erreichung dieses Vorteils ist bei der Erfindung also auch die vorteilhaft gewählte Stufung.

## Patentansprüche

1. Baureihe von ein- oder mehrstufigen Getrieben,
umfassend mindestens eine Baugröße von Getrieben, wobei jede Baugröße jeweils mindestens eine Variante umfasst, die jeweils mindestens ein Gehäuseteil (32, 40) und mindestens eine Getriebestufe (2, 39, 41) umfasst, wobei die Getriebestufe (2, 39, 41) aus einem als Stirnrad (2) ausgebildeten ersten verzahnten Teil und einer Motorwelle (7a, 7b, 7c) als eintreibende Welle, auf der oder um die ein zweites verzahntes Teil (21, 22, 23) angeordnet ist, besteht,
diese jeweilige Getriebestufe (2, 39, 41) durch den Achsabstand zwischen dem Stirnrad (2) und der Motorwelle (7a, 7b, 7c) kennzeichenbar ist,
wobei die Motorwelle (7a, 7b, 7c) an ihrem einen Ende in einem Lager (6) eines Getriebedeckels (4) festgelegt ist,
und die Befestigungsschrauben (3) des Getriebedeckels (4) auf einem Kreis angeordnet sind, dessen Mittelpunkt nicht mit dem Mittelpunkt der Achse der Motorwelle (7a, 7b, 7c) zusammenfällt,
wobei bei einer Baugröße mindestens zwei Varianten zwei verschiedene Achsabstände (a1, a2) aufweisen, wobei bei verschiedenen Achsabständen die Motorposition verschieden ist, insbesondere durch Drehung des Getriebedeckels (4) um 180°.

2. Baureihe nach Anspruch 1,
**dadurch gekennzeichnet, dass**
bei einer ersten Variante in einer Baugröße eine erste Motorposition mit einem ersten Achsabstand (a1) vorgesehen ist und das zweite verzahnte Teil (22) als Aufsteckritzel (22) ausgebildet ist
und bei der zweiten Variante in der Baugröße eine zweite Motorposition mit einem zweiten Achsabstand (a2) vorgesehen ist und das zweite verzahnte Teil als Einsteckritzel (23) ausgebildet ist,
wobei das Stirnrad (2) in beiden Varianten gleich ist.

3. Baureihe nach Anspruch 1 oder 2,
**dadurch gekennzeichnet, dass**
bei mindestens einer Baugröße mindestens ein Gehäuseteil in mindestens zwei, gegeneinander verdrehten Positionen und/oder Orientierungen bei der Fertigung montierbar ist.

4. Baureihe nach einem der Ansprüche 1 bis 3,
**dadurch gekennzeichnet, dass**
den zwei, gegeneinander verdrehten Positionen und/oder Orientierungen des Gehäuseteils jeweils ein Achsabstand der Getriebestufe entspricht, wobei durch die Wahl des Drehwinkels verschiedene Achsabstände erzeugbar sind.

5. Baureihe von ein- oder mehrstufigen Getrieben,
umfassend mindestens eine Baugröße von Getrieben, wobei jede Baugröße jeweils mindestens eine Variante umfasst, die jeweils mindestens ein Gehäuseteil (32, 40) und mindestens eine Getriebestufe (2, 39, 41) umfasst,
wobei
die jeweilige Getriebestufe durch mindestens einen Achsabstand (a1, a2) kennzeichenbar ist
und bei einer Baugröße mindestens zwei Varianten zwei verschiedene Achsabstände (a1, a2) aufweisen,
wobei
in der ersten Variante das Gehäuseteil (32) einen ersten Bereich (51) aufweist, der rotationssymmetrisch zu einer zweiten Achse (54) ist, und zusätzlich einen zweiten Bereich (52) aufweist, der rotationssymmetrisch zu einer ersten Achse (53) ist,
und mindestens ein Lagersitz (35) und mindestens ein Wellendichtringsitz (36) radial innerhalb des ersten Bereichs (51) und rotationssymmetrisch zur ersten Achse (53) angeordnet sind,
und in einer zweiten Variante das Gehäuseteil (40) ein erster Bereich (51) aufweist, der rotationssymmetrisch zu einer zweiten Achse (54) ist,
das Gehäuseteil (40) der zweiten Variante sich von dem Gehäuseteil (32) der ersten Variante dadurch unterscheidet, dass der zweite Bereich (52) der ersten Variante fehlt,
und mindestens ein Lagersitz (44) und mindestens ein Wellendichtring (43) radial innerhalb des ersten Bereichs (51) und rotationssymmetrisch zur zweiten Achse (54) angeordnet sind.

6. Baureihe nach einem der Ansprüche 1 bis 5,
**dadurch gekennzeichnet, dass**
mindestens eine mit ganzzahligem i kennzeichenbare Baugröße Bᵢ von Getrieben umfasst ist, wobei jede Baugröße Bᵢ jeweils mindestens eine Variante umfasst, die jeweils mindestens ein Gehäuseteil (4, 32, 40) und die Getriebestufe ein erstes Verzahnungsteil (2) und ein zweites Verzahnungsteil (21, 22, 23, 39, 41) umfasst,
wobei jede Baugröße Bᵢ Varianten umfasst, die verschiedene Achsabstände (a1, a2) zwischen erstem Verzahnungsteil (2) und zweitem Verzahnungsteil (21, 22, 23, 39, 41) aufweisen, wobei jede Baugröße Bᵢ mindestens m solche Achsabstände (a1, a2) umfasst und m ganzzahlig und größer als 1 ist, und wobei mit diese Achsabstände mit A_{i,n} bezeichenbar sind, und wobei n ganzzahlige Werte von 0 bis m -1 annimmt,
und dass die Achsabstände A_{i,n} bei jeweils konstantem n und laufendem i eine Reihe bilden, die gestuft ist, insbesondere in der Reihe 54, 45, 38, 32 oder in einer geometrischen oder arithmetischen Reihe,
und dass die Differenz A_{i,n} - A_{i,0} eine von n abhängige Konstante cₙ ist für alle i,
und wobei das Stirnrad (2) die Zähnezahl Z_{1 k} hat und die Ritzel-Verzahnung (21,22, 23, 39, 41) die Zähnezahl Z_{2,p,q} hat, wobei innerhalb einer Baugröße Bᵢ verschiedene Zähnezahlen Z_{1 k} und Z_{2,p,q} verwendbar sind, und wobei k, p und q ganzzahlig sind,
und dass die Zähnezahlen Z_{2,p,q} in mit dem Index p nummerierte Teilsequenzen klassifizierbar sind; und die Elemente der Teilsequenz mit q nummeriert sind,
und dass die Zähnezahlen Z_{2,p,q} bei jeweils konstantem p und laufendem q eine Reihe bilden, die gestuft ist, insbesondere eine Reihe, wie 90, 92, 94, 95, oder aufeinanderfolgender Zahlen, wie 1, 2, 3, 4, oder eine geometrische oder arithmetische Reihe,
und dass die Differenz Z_{2,p+1,q} - Z_{2,p,q} eine nur von p abhängige Konstante cₚ, insbesondere 0, ist für alle q,
und dass das erste Verzahnungsteil (2) innerhalb der Baugröße B, in jeder Teilsequenz mindestens einmal wiederverwendet ist, wobei Z_{2,p+1,q} gleich Z_{2,p,q} ist
und die Teilsequenzen für einen ersten Wert von p Varianten mit Aufsteckritzel kennzeichnen und für einen zweiten Wert von p Varianten mit Einsteckritzel kennzeichnen.

7. Baureihe nach Anspruch 6,
**dadurch gekennzeichnet, dass**
die Teilsequenzen für einen dritten Wert von p Varianten mit verzahnter Welle kennzeichnen.

8. Baureihe nach einem der vorangegangenen Ansprüche,
**dadurch gekennzeichnet, dass**
die Getriebestufe eine eintriebsseitig angeordnete Stufe ist.

9. Baureihe nach einem der vorangegangenen Ansprüche,
**dadurch gekennzeichnet, dass**
die Getriebestufe eine Stirnradstufe ist.

10. Baureihe nach einem der vorangegangenen Ansprüche,
**dadurch gekennzeichnet, dass**
der Achsabstand zwischen zwei verzahnten Teilen, wie Rad, verzahnte Welle, Welle mit Einsteckritzel, Welle mit Aufsteckritzel oder Schnecke, vorliegt.

11. Baureihe nach mindesten einem der vorangegangenen Ansprüche,
**dadurch gekennzeichnet, dass**
bei den Varianten mit verschiedenen Achsabständen die Position eines ersten verzahnten Teiles gleich ist, die Position des zweiten verzahnten Teiles aber verschieden ist

12. Baureihe nach mindesten einem der vorangegangenen Ansprüche,
**dadurch gekennzeichnet, dass**
das erste verzahnte Teil ein Zahnrad ist und das zweite verzahnte Teil auf der Achse oder um die Achse eines eintreibenden Motors positioniert ist, wobei bei verschiedenen Achsabständen die Motorposition verschieden ist

13. Verfahren zur Fertigung einer Baureihe von ein- oder mehrstufigen Getrieben, umfassend mindestens eine Baugröße von Getrieben, wobei jede Baugröße jeweils mindestens eine Variante umfasst, die jeweils mindestens ein Gehäuseteil (32, 40) und mindestens eine Getriebestufe (2, 39, 41) umfasst,
wobei
diese jeweilige Getriebestufe (2, 39, 41) durch mindestens einen Achsabstand (a1, a2) kennzeichenbar ist,
bei einer Baugröße mindestens zwei Varianten zwei verschiedene Achsabstände (a1, a2) aufweisen,
wobei die Gehäuseteile (32, 40) der zwei Varianten beim Fertigen mindestens aus **demselben gegossenen Rohteil gefertigt werden,**
das Verfahren zur Fertigung mindestens eine spanende Bearbeitung, insbesondere zur Herstellung eines Lagersitzes (35, 44) und eines Wellendichtringsitzes (36, 43), umfasst,
das gegossene Rohteil oder ein Gehäuseteil einen ersten Bereich (51) aufweist, der rotationssymmetrisch zu einer zweiten Achse (54) ist, und zusätzlich einen zweiten Bereich (52) aufweist, der rotationssymmetrisch zu einer ersten Achse (54) ist,
bei der Fertigung der ersten Variante der Lagersitz (35) und der Wellendichtringsitz (36) symmetrisch zur ersten Achse (53) erzeugt werden
und bei der Fertigung der zweiten Variante der zweite Bereich (52) entfernt wird und der Lagersitz (44) und der Wellendichtringsitz (43) symmetrisch zur zweiten Achse (54) erzeugt werden.

## Claims

1. Series of single- or multi-stage gearings,
comprising at least one size of gearings, each size comprising in each case at least one variant which comprises in each case at least one housing part (32, 40) and at least one gearing stage (2, 39, 41), the gearing stage (2, 39, 41) comprising a first toothed part formed as a spur wheel (2) and a motor shaft (7a, 7b, 7c) as driving shaft, on which or around which a second toothed part (21, 22, 23) is arranged,
it being possible for this respective gearing stage (2, 39, 41) to be designated by the centre distance between the spur wheel (2) and the motor shaft (7a, 7b, 7c),
the motor shaft (7a, 7b, 7c) being fixed at its one end in a bearing (6) of a gearing cover (4),
and the fastening screws (3) of the gearing cover (4) being arranged on a circle, the centre of which does not coincide with the centre of the axis of the motor shaft (7a, 7b, 7c),
in the case of one size, at least two variants having two different centre distances (a1, a2), the motor position being different in the case of different centre distances, in particular as a result of rotation of the gearing cover (4) by 180°.

2. Series according to Claim 1,
**characterised in that**
in the case of a first variant in one size, a first motor position with a first centre distance (a1) is provided and the second toothed part (22) is formed as a slip-on pinion (22)
and in the case of the second variant in the size, a second motor position with a second centre distance (a2) is provided and the second toothed part is formed as a push-in pinion (23),
the spur wheel (2) being the same in both variants.

3. Series according to Claim 1 or 2,
**characterised in that**
in the case of at least one size, at least one housing part can be mounted, during production, in at least two positions and/or orientations rotated relative to one another.

4. Series according to one of Claims 1 to 3,
**characterised in that**
in each case one centre distance of the gearing stage corresponds to the two positions and/or orientations, rotated relative to one another, of the housing part, it being possible for different centre distances to be produced through the choice of the angle of rotation.

5. Series of single- or multi-stage gearings,
comprising at least one size of gearings, each size comprising in each case at least one variant which comprises in each case at least one housing part (32, 40) and at least one gearing stage (2, 39, 41),
it being possible for the respective gearing stage to be designated by at least one centre distance (a1, a2)
and in the case of one size, at least two variants having two different centre distances (a1, a2),
in the first variant, the housing part (32) having a first region (51), which is rotationally symmetrical with respect to a second axis (54), and additionally having a second region (52), which is rotationally symmetrical with respect to a first axis (53),
and at least one bearing seat (35) and at least one shaft sealing ring seat (36) being arranged radially within the first region (51) and rotationally symmetrical with respect to the first axis (53),
and in a second variant, the housing part (40) having a first region (51), which is rotationally symmetrical with respect to a second axis (54),
the housing part (40) of the second variant differing from the housing part (32) of the first variant in that the second region (52) of the first variant is absent,
and at least one bearing seat (44) and at least one shaft sealing ring (43) being arranged radially within the first region (51) and rotationally symmetrical with respect to the second axis (54).

6. Series according to one of Claims 1 to 5,
**characterised in that**
it comprises at least one size Bᵢ, which can be designated by an integer i, of gearings, each size Bᵢ comprising in each case at least one variant which comprises in each case at least one housing part (4, 32, 40) and the gearing stage comprises a first toothing part (2) and a second toothing part (21, 22, 23, 39, 41),
each size Bᵢ comprising variants which have different centre distances (a1, a2) between first toothing part (2) and second toothing part (21, 22, 23, 39, 41), where each size Bᵢ comprises at least m such centre distances (a1, a2) and m is an integer and is greater than 1, and where these centre distances can be denoted by A_{i,n,} and where n assumes integral values of 0 to m-1,
and **in that** the centre distances A_{i,n} form, with in each case a constant n and consecutive i, a sequence with is stepped, in particular in the sequence 54, 45, 38, 32 or in a geometric or arithmetic sequence,
and **in that** the difference A_{i,n} - A_{i,0} is a constant cₙ, dependent on n, for all i's,
and the spur wheel (2) having the number of teeth Z_{1 k} and the pinion toothing (21, 22, 23, 39, 41) having the number of teeth Z_{2,p,q,} different numbers of teeth Z_{1 k} and Z_{2,p,q} being usable within one size Bᵢ, and k, p and q being integers,
and **in that** the numbers of teeth Z_{2,p,q} can be classified in subsequences numbered with the index p, and the elements of the subsequence are numbered with q,
and **in that** the numbers of teeth Z_{2,p,q} form, with in each case a constant p and consecutive q, a sequence which is stepped, in particular a sequence such as 90, 92, 94, 95, or consecutive numbers, such as 1, 2, 3, 4, or a geometric or arithmetic sequence,
and **in that** the difference Z_{2,p+1,q} - Z_{2,p,q} is a constant cₚ dependent on p, in particular 0, for all q's,
and **in that** the first toothing part (2) within the size Bᵢ is reused at least once in each subsequence, where Z_{2,p+1,q} equals Z_{2,p,q}
and the subsequences for a first value of p designate variants with slip-on pinion and for second value of p designate variants with push-in pinion.

7. Series according to Claim 6,
**characterised in that**
the subsequences for a third value of p designate variants with a toothed shaft.

8. Series according to one of the preceding claims,
**characterised in that**
the gearing stage is a stage arranged on the driving side.

9. Series according to one of the preceding claims,
**characterised in that**
the gearing stage is a spur-wheel stage.

10. Series according to one of the preceding claims,
**characterised in that**
the centre distance is present between two toothed parts, such as wheel, toothed shaft, shaft with push-in pinion, shaft with slip-on pinion or worm.

11. Series according to one of the preceding claims,
**characterised in that**
in the case of the variants with different centre distances, the position of a first toothed part is identical, but the position of the second toothed part is different.

12. Series according to one of the preceding claims,
**characterised in that**
the first toothed part is a toothed wheel and the second toothed part is positioned on the axis or about the axis of a driving motor, the motor position being different in the case of different centre distances.

13. Method for production of a series of single- or multi-stage gearings,
comprising at least one size of gearings, each size comprising in each case at least one variant which comprises in each case at least one housing part (32, 40) and at least one gearing stage (2, 39, 41),
it being possible for this respective gearing stage (2, 39, 41) to be designated by at least one centre distance (a1, a2),
in the case of one size, at least two variants having two different centre distances (a1, a2),
the housing parts (32, 40) of the two variants, during production, being produced at least from the same cast blank,
the method for production comprising at least a machining, in particular for producing a bearing seat (35, 44) and a shaft sealing ring seat (36, 43),
the cast blank or a housing part having a first region (51), which is rotationally symmetrical with respect to a second axis (54), and additionally a second region (52), which is rotationally symmetrical with respect to a first axis (54),
during the production of the first variant, the bearing seat (35) and the shaft sealing ring seat (36) being produced symmetrically with respect to the first axis (53)
and during the production of the second variant, the second region (52) being removed and the bearing seat (44) and the shaft sealing ring seat (43) being produced symmetrically with respect to the second axis (54).

## Revendications

1. Gamme de transmissions à un ou plusieurs échelon(s),
englobant au moins une taille de réalisation de transmissions, sachant que chaque taille de réalisation comprend respectivement au moins une variante qui inclut, à chaque fois, au moins une partie de carter (32, 40) et au moins un palier de transmission (2, 39, 41), sachant que ledit palier de transmission (2, 39, 41) est constitué d'une première partie dentée réalisée sous la forme d'une roue (2) à denture droite, et d'un arbre moteur (7a, 7b, 7c) remplissant la fonction d'un arbre d'entrée sur lequel ou autour duquel une seconde partie dentée (21, 22, 23) est disposée,
ce palier de transmission considéré (2, 39, 41) peut être **caractérisé par** la distance entre axes séparant la roue (2) à denture droite et l'arbre moteur (7a, 7b, 7c),
ledit arbre moteur (7a, 7b, 7c) étant consigné à demeure, par l'une de ses extrémités, dans un coussinet (6) d'un couvercle (4) de transmission,
et les boulons (3) de fixation dudit couvercle (4) de transmission sont agencés sur un cercle dont le centre ne coïncide pas avec le centre de l'axe de l'arbre moteur (7a, 7b, 7c),
sachant que, dans une taille de réalisation, au moins deux variantes présentent deux distances (a1, a2) entre axes différentes, la position du moteur étant différente en présence de différentes distances entre axes, notamment suite à une rotation de 180° du couvercle (4) de transmission.

2. Gamme selon la revendication 1,
**caractérisée par le fait que**,
dans une première variante présentant une taille de réalisation, une première position du moteur est prévue avec une première distance (a1) entre axes, et la seconde partie dentée (22) est réalisée sous la forme d'un pignon (22) rapporté par emboîtement
et, dans la seconde variante présentant la taille de réalisation, une seconde position du moteur est prévue avec une seconde distance (a2) entre axes, et la seconde partie dentée est réalisée sous la forme d'un pignon (23) intégré par emboîtement,
la roue (2) à denture droite étant identique dans les deux variantes.

3. Gamme selon la revendication 1 ou 2,
**caractérisée par le fait que**,
dans au moins une taille de réalisation, au moins une partie de carter peut être montée, au stade de la production, selon au moins deux positions et/ou orientations décalées l'une de l'autre.

4. Gamme selon l'une des revendications 1 à 3,
**caractérisée par le fait**
**qu'**une distance respective entre axes du palier de transmission correspond aux deux positions et/ou orientations de la partie de carter, décalées l'une de l'autre, sachant que différentes distances entre axes peuvent être engendrées par le choix de l'angle de rotation.

5. Gamme de transmissions à un ou plusieurs échelon(s),
englobant au moins une taille de réalisation de transmissions, sachant que chaque taille de réalisation comprend respectivement au moins une variante qui inclut, à chaque fois, au moins une partie de carter (32, 40) et au moins un palier de transmission (2, 39, 41),
sachant que
le palier de transmission considéré peut être **caractérisé par** au moins une distance (a1, a2) entre axes et que,
dans une taille de réalisation, au moins deux variantes présentent deux distances (a1, a2) entre axes différentes,
sachant que,
dans la première variante, la partie de carter (32) présente une première région (51) à symétrie de révolution vis-à-vis d'un second axe (54), et est additionnellement munie d'une seconde région (52) à symétrie de révolution vis-à-vis d'un premier axe (53),
et au moins un siège (35) de coussinet et au moins un siège (36) de bague d'étanchement d'arbre sont disposés radialement à l'intérieur de la première région (51) et avec symétrie de révolution vis-à-vis du premier axe (53),
et, dans une seconde variante, la partie de carter (40) présente une première région (51) à symétrie de révolution vis-à-vis d'un second axe (54),
la partie de carter (40) de la seconde variante se différenciant, de la partie de carter (32) de la première variante, par l'absence de la seconde région (52) de la première variante,
et au moins un siège (44) de coussinet et au moins un siège (43) de bague d'étanchement d'arbre sont disposés radialement à l'intérieur de la première région (51) et avec symétrie de révolution vis-à-vis du second axe (54).

6. Gamme selon l'une des revendications 1 à 5,
**caractérisée par le fait**
**qu'**elle englobe au moins une taille de réalisation Bᵢ de transmissions, qui peut être **caractérisée par** un nombre entier i, chaque taille de réalisation Bᵢ comprenant, respectivement, au moins une variante qui inclut, à chaque fois, au moins une partie de carter (4, 32, 40), et le palier de transmission comprend une première partie dentée (2) et une seconde partie dentée (21, 22, 23, 39, 41),
chaque taille de réalisation Bᵢ englobant des variantes qui présentent des distances (a1, a2) entre axes différentes entre la première partie dentée (2) et la seconde partie dentée (21, 22, 23, 39, 41), chaque taille de réalisation Bᵢ incluant au moins m distances (a1, a2) entre axes de ce genre, et m étant un nombre entier supérieur à 1, ces distances entre axes pouvant être désignées par A_{i,n}, et n prenant des valeurs entières de 0 à m-1 ;
par le fait que, n et i étant respectivement constant et graduel, les distances A_{i,n} entre axes forment une série échelonnée, en particulier la série 54, 45, 38, 32, ou une série géométrique ou arithmétique ;
par le fait que la différence A_{i,n} - A_{i,0} est une constante cₙ pour tous les i, tributaire de n,
la roue (2) à denture droite présentant le nombre de dents Zᵢₖ, et la denture d'engrènement (21, 22, 23, 39, 41) présentant le nombre de dents Z_{2,p,q}, des nombres de dents différents Zᵢₖ et Z_{2,p,q} pouvant être utilisés au sein d'une taille de réalisation B₁, et k, p et q étant des nombres entiers ;
par le fait que les nombres de dents Z_{2,p,q} peuvent être classifiés en des séquences partielles numérotées avec l'indice p, et les éléments de la séquence partielle étant numérotés avec q ;
par le fait que, p et q étant respectivement constant et graduel, les nombres de dents Z_{2,p,q} forment une série échelonnée, en particulier une série telle que 90, 92, 94, 95, ou bien des chiffres successifs tels que 1, 2, 3, 4, voire une série géométrique ou arithmétique ;
par le fait que la différence Z_{2,p+1,q} - Z_{2,p,q} est une constante cₚ pour tous les q, représentant notamment 0 et uniquement tributaire de p ;
et par le fait que la première partie dentée (2) peut être réutilisée au moins une fois dans chaque séquence partielle au sein de la taille de réalisation Bᵢ, Z_{2,p+1,q} étant égale à Z_{2,p,q},
et les séquences partielles étant caractéristiques d'une première valeur de p variantes à pignon rapporté par emboîtement, et d'une seconde valeur de p variantes à pignon intégré par emboîtement.

7. Gamme selon la revendication 6,
**caractérisée par le fait que**
les séquences partielles sont caractéristiques d'une troisième valeur de p variantes à arbre denté.

8. Gamme selon l'une des revendications précédentes,
**caractérisée par le fait que**
le palier de transmission est un palier disposé côté entrée.

9. Gamme selon l'une des revendications précédentes,
**caractérisée par le fait que**
le palier de transmission est un palier à pignons droits.

10. Gamme selon l'une des revendications précédentes,
**caractérisée par le fait que**
la distance entre axes sépare deux parties dentées telles qu'une roue, un arbre denté, un arbre à pignon intégré par emboîtement, un arbre à pignon rapporté par emboîtement, ou une vis sans fin.

11. Gamme selon au moins l'une des revendications précédentes,
**caractérisée par le fait que**,
dans les variantes présentant des distances entre axes différentes, la position d'une première partie dentée est identique, mais la position de la seconde partie dentée est toutefois différente.

12. Gamme selon au moins l'une des revendications précédentes,
**caractérisée par le fait que**
la première partie dentée est une roue dentée, et la seconde partie dentée est calée sur l'axe ou autour de l'axe d'un moteur d'entrée, la position dudit moteur étant différente en présence de différentes distances entre axes.

13. Procédé de fabrication d'une gamme de transmissions à un ou plusieurs échelon(s),
englobant au moins une taille de réalisation de transmissions, sachant que chaque taille de réalisation comprend respectivement au moins une variante qui inclut, à chaque fois, au moins une partie de carter (32, 40) et au moins un palier de transmission (2, 39, 41),
sachant que
ce palier de transmission considéré (2, 39, 41) peut être **caractérisé par** au moins une distance (a1, a2) entre axes,
dans une taille de réalisation, au moins deux variantes présentent deux distances (a1, a2) entre axes différentes,
les parties de carters (32, 40) des deux variantes étant produites, au stade de la fabrication, au moins à partir de la même pièce brute venue de coulée,
le procédé de fabrication englobe au moins un usinage par enlèvement de copeaux, en particulier pour la production d'un siège (35, 44) de coussinet et d'un siège (36, 43) de bague d'étanchement d'arbre,
la pièce brute coulée, ou une partie de carter, présente une première région (51) à symétrie de révolution vis-à-vis d'un second axe (54), et est additionnellement munie d'une seconde région (52) à symétrie de révolution vis-à-vis d'un premier axe (54),
lors de la production de la première variante, le siège (35) de coussinet et le siège (36) de bague d'étanchement d'arbre sont façonnés symétriquement vis-à-vis du premier axe (53)
et, lors de la production de la seconde variante, la seconde région (52) est éliminée, puis le siège (44) de coussinet et le siège (43) de bague d'étanchement d'arbre sont façonnés symétriquement vis-à-vis du second axe (54).
